(19) Europäisches Patentamt / European Patent Office / Office européen des brevets

(11) **EP 3 783 077 A1**

(12) **EUROPEAN PATENT APPLICATION**
published in accordance with Art. 153(4) EPC

(43) Date of publication:
**24.02.2021 Bulletin 2021/08**

(21) Application number: **18915001.4**

(22) Date of filing: **25.07.2018**

(51) Int Cl.:
**C09J 7/38** (2018.01)          **C09J 7/22** (2018.01)
**C09J 201/00** (2006.01)

(86) International application number:
**PCT/JP2018/027850**

(87) International publication number:
**WO 2019/202749 (24.10.2019 Gazette 2019/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2018   JP 2018078480**

(71) Applicant: **Teraoka Seisakusho Co., Ltd.
Tokyo 140-8711 (JP)**

(72) Inventors:
• **NIWA, Masashi**
**Tokyo 140-8711 (JP)**
• **ISHIKAWA, Kazuki**
**Tokyo 140-8711 (JP)**
• **TSUCHIYA, Yasushi**
**Tokyo 140-8711 (JP)**

(74) Representative: **J A Kemp LLP
14 South Square
Gray's Inn
London WC1R 5JJ (GB)**

(54) **PRESSURE-SENSITIVE ADHESIVE TAPE**

(57) Disclosed is an adhesive tape having an adhesive layer on one side or both sides of a base 1, wherein the adhesive layer when having the adhesive layer on one side of the base 1, or at least one adhesive layer of two adhesive layers when having the adhesive layers on both sides of the base 1 has a first adhesive layer 2 in contact with the base 1 and a second adhesive region 3 in contact with the first adhesive layer 2 and which is situated on the surface side of the adhesive tape, and the storage elastic modulus G' of the first adhesive layer 2 is higher than the storage elastic modulus G' of the second adhesive region 3. This adhesive tape provides easy position adjustment and easy air removal at the time of sticking, and has excellent waterproofness after sticking.

FIG. 1

EP 3 783 077 A1

**Description**

Technical field

The present invention relates to an adhesive tape that is easy to adjust the position and to remove air at the time of sticking, and has excellent waterproofness after sticking.

Background Art

Adhesive tapes are widely used in various industrial applications such as packaging, office work and building materials. Particularly in recent years, adhesive tapes are also used in portable electronic devices such as smartphones and mobile phones to bond the protective panel of a display to a housing and to fix other members and modules. Adhesive tapes used in portable electronic devices and other applications are often required to have waterproofness.

On the other hand, the adhesive tape used for fixing members needs high adhesive force. However, if the adhesive force is high, it may be difficult to adjust the position of the adhesive tape on the adherend, or air may be trapped between the adhesive tape and the adherend at the time of sticking in some cases. Therefore, adhesive tapes partially having an adhesive surface and adhesive tapes having unevenness on the surface of the adhesive layer have been proposed.

Patent Document 1 discloses an adhesive sheet in which a non-adhesive layer is partially laminated on the surface of an adhesive layer and the surface of the non-adhesive layer serves as an air passage to improve air removal. However, in this adhesive sheet, increasing the proportion of the adhesive layer makes it difficult to remove air, and increasing the proportion of the non-adhesive layer reduces the adhesive force and waterproofness..

Patent Document 2 discloses a method of forming a groove on the surface of the adhesive layer of an adhesive sheet by using a release liner having a convex embossed pattern on the surface, thereby improving the air removal property of the adhesive sheet. However, this adhesive sheet is inferior in waterproofness because unevenness remains on the surface of the adhesive layer even after the adhesive layer is sticked.

Patent Document 3 discloses a pressure-bonding adhesive member in which a convex portion formed of an aggregate of cohesive particles having a specific shear adhesive force is provided on the adhesive layer. Additionally, it is explained that this adhesive member is easy to adjust the position and excellent in adhesiveness because the convex portion formed of an aggregate of cohesive particles moves to the inside of the adhesive layer by pressurization at the time of sticking. However, it is also explained that when the convex portion moves to the inside of the adhesive layer, a slight gap may be formed between the convex portion and the adhesive layer in some cases (paragraph [0032]). Therefore, this adhesive member is inferior in waterproofness.

Patent Document 4 discloses an adhesive tape of which position adjustment is made easy by partially providing a low-adhesive convex portion on the surface of the adhesive layer. However, since the elastic modulus of the convex portion is higher than the elastic modulus of the adhesive layer (that is, the convex portion is harder than the adhesive layer), it is considered that when the convex portion moves to the inside of the adhesive layer by pressurization, a gap is formed between the convex portion and the adhesive layer as in the case of the adhesive member of Patent Document 3. Therefore, this adhesive tape is inferior in waterproofness.

Patent Document 5 describes an adhesive tape having air removing property improved by partially providing an adhesive portion on a foamed base. However, in this adhesive tape, increasing the proportion of the adhesive portion makes it difficult to remove air, and increasing the proportion of the non-adhesive portion reduces the adhesive force and waterproofness, as in the case of the adhesive sheet of Patent Document 1.

Related Art Documents

Patent Document

Patent Document 1: JP 2000-160117
Patent Document 2: JP 2006-070273
Patent Document 3: WO2016/143731
Patent Document 4: WO2017/065275
Patent Document 5: JP 2018-002772

Summary of Invention

Technical Problem

The present invention has been made to solve the problems of the prior art as described above. That is, the present invention has an object of providing an adhesive tape which is easy to adjust the position and to remove air at the time of sticking, and has excellent waterproofness after sticking.

Solution to Problem

As a result of intensive studies to achieve the above object, the present inventors have found that it is very effective to provide a second adhesive region having low storage elastic modulus G' on a first adhesive layer having high storage elastic modulus G', leading the completion of the present invention.
That is, the present invention is an adhesive tape having an adhesive layer on one side or both sides of a base, wherein
the adhesive layer when having the adhesive layer on one side of the base, or at least one adhesive layer of two adhesive layers when having the adhesive layer on both sides of the base has a first adhesive layer in contact with the base and a second adhesive region in contact with the first adhesive layer and which is situated on the surface side of the adhesive tape, and
the storage elastic modulus G' of the first adhesive layer is higher than the storage elastic modulus G' of the second adhesive region.

Advantageous Effect of Invention

In the adhesive tape of the present invention, since the storage elastic modulus G' of the second adhesive region is lower than the storage elastic modulus G' of the first adhesive layer, when the adhesive tape is pressure-bonded to the adherend, the second adhesive region is crushed and the adhesive surface becomes substantially flat. Therefore, waterproofness after sticking is excellent. Additionally, the adhesive of the crushed second adhesive region is preferably present partially on the surface of the first adhesive layer, or mixed with the adhesive of the surface portion of the first adhesive layer, and there is no portion on the surface of the adhesive layer that inhibits adhesiveness. Therefore, also adhesive force can be sufficiently secured. Further, in the embodiment in which the surface of the adhesive layer on the side of the second adhesive region has an uneven shape, it is easy to adjust the position and to remove air at the time of sticking.

Brief Explanation of Drawings

FIG. 1 is a schematic cross-sectional view showing an embodiment of the adhesive tape of the present invention.
FIG. 2 is a schematic cross-sectional view showing an embodiment of the adhesive tape of the present invention.
FIG. 3 is a schematic plan view showing an uneven shape pattern on the surface of a second adhesive region in Examples 1, 4 and 5.
FIG. 4 is a schematic plan view showing an uneven shape pattern on the surface of a second adhesive region in Example 2.
FIG. 5 is a schematic plan view showing an uneven shape pattern on the surface of a second adhesive region in Example 3.
FIG. 6 is a schematic cross-sectional view for explaining a method of measuring bending moment in Examples and Comparative Examples.

Modes for Carrying Out the Invention

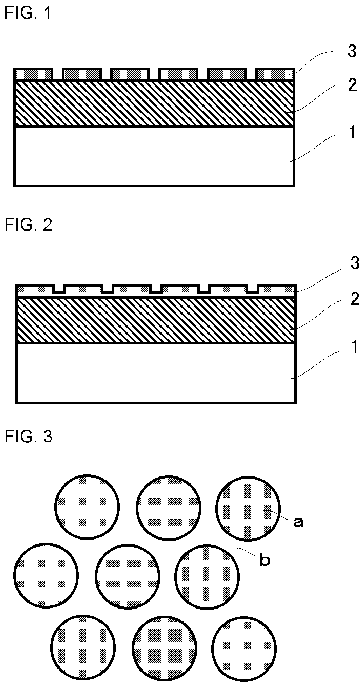

FIG. 1 is a schematic cross-sectional view showing an embodiment of the adhesive tape of the present invention. In this adhesive tape, an adhesive layer is provided on one side of the base 1. The adhesive layer has a first adhesive layer 2 in contact with the base 1 and a second adhesive region 3 in contact with the first adhesive layer 2 and located on the surface side of the adhesive tape. Further, in this adhesive layer, the surface of the adhesive layer on the side of the second adhesive region has an uneven shape. This uneven shape is formed by partially providing a second adhesive region 3 on the first adhesive layer 2 at intervals.
The uneven shape pattern is not particularly limited. For example, it may be a pattern in which round island-shaped convex portions are arranged, a pattern in which square island-shaped convex portions are arranged, or a pattern in which vertical stripe-shaped convex portions are arranged. A pattern in which the convex portions are regularly arranged is preferable, but a pattern in which the convex portions are randomly arranged may also be used. Examples of the other shapes of the convex portion include a triangular shape and a polygonal shape. The width of the convex portion is not particularly limited, but is preferably 0.5 to 5.0 mm. The gap between the convex portions (that is, the width of the concave portion) is not particularly limited, but is preferably 0.1 to 3.0 mm.

The second adhesive region 3 whose surface has an uneven shape as explained above can be formed, for example, by forming a second adhesive region 3 of desired pattern on a releasing-treated film by gravure printing, and transferring this onto the first adhesive layer 2.

The embodiment shown in FIG. 1 is a preferable one, but the present invention is not limited thereto. For example, it may also be a constitution in which a second adhesive region 3 is provided so as to cover the whole surface of a first adhesive layer 2 and the surface of the second adhesive region 3 has an uneven shape, as shown in FIG. 2.

In the embodiments shown in FIG. 1 and FIG. 2, the adhesive layer is provided on one side of the base 1, but the present invention is not limited thereto. For example, the adhesive layers may be provided on both sides of the base 1. In this case, at least one of the two adhesive layers provided on both sides of the base 1 may have the first adhesive layer 2 and the second adhesive region 3.

The embodiments shown in FIG. 1 and FIG. 2 is preferable in terms of position adjustment and air removal at the time of sticking since the surface of the adhesive layer on the second adhesive region side has an uneven shape, but the present invention is not limited to these. For example, even if the surface of the adhesive layer on the side of the second adhesive region is flat, it is believed to be easy to adjust the position and to remove air at the time of sticking, by making the adhesive force of the second adhesive region 3 relatively low, and the adhesive force is believed to be secured sufficiently, since the second adhesive region 3 is crushed to mixing with the adhesive of the surface portion of the first adhesive layer 2, by pressure-bonding the adhesive tape to the adherend.

[Base]

The type of the base is not particularly limited, and various bases known to be usable for the adhesive tape can be used. In particular, a foamed resin base and a resin film base are preferable.

Specific examples of the resin film base include polyolefin films such as a polyethylene film and a polypropylene film, polyester films such as a polyethylene terephthalate film and a polybutylene terephthalate film; and a polyphenylene sulfide film, a polyimide film and a polyamide film. Particularly, a polypropylene film, a polyethylene terephthalate film, a polyphenylene sulfide film and a polyimide film are more preferable from the viewpoint of having heat resistance and chemical resistance suitable for battery applications. The base may be subjected to treatments such as corona treatment, plasma treatment, flame treatment and anchoring agent treatment, if necessary. The thickness of the resin film base is preferably 2 to 300 $\mu$m, and more preferably 2 to 100 $\mu$m.

The resin constituting the foamed resin base is not particularly limited. For example, it is preferable to appropriately select and use a base polymer having water resistance and a cross-linking agent, from the viewpoint of waterproofness. Specific examples of the base polymer include polyurethane-based resins that are polymers of polyols and polyfunctional isocyanates; polyolefin-based resins such as polyethylene and polypropylene; styrene-based block copolymerized polymers such as a styrene-butadiene-styrene-block copolymerized polymer and a styrene-isobutylene-styrene-block copolymerized polymer; ethylene-based copolymerized polymers such as ethylene-vinyl acetate, ethylene-ethyl acrylate and ethylene-methyl methacrylate; acrylic block copolymerized polymers such as methyl methacrylate-butyl acrylate-methyl methacrylate; acrylic ester-based copolymers obtained by copolymerizing monomers such as 2-ethylhexyl acrylate and methyl acrylate; and halogenated polymers such as polyvinyl chloride. In particular, it is preferable to use a polyolefin-based resin composition containing an ethylene-vinyl acetate copolymer and another polyolefin-based resin.

As the polyolefin-based resin, particularly, polyethylene and polypropylene are preferable. The thickness of the polyolefin-based foamed resin base is preferably 0.05 to 2 mm.

The polyurethane-based resin is generally a resin containing a soft segment composed of a polyol monomer unit and a hard segment composed of a polyfunctional isocyanate compound or a low molecular weight glycol monomer unit. The polyol used for the polyurethane-based resin is a compound having two or more hydroxyl groups. Specifically, the number of hydroxyl groups of the polyol is preferably 2 to 3, and more preferably 2. As the polyol, for example, a polyester polyol, a polyether polyol, a polycaprolactone polyol, a polycarbonate polyol and a castor oilbased polyol can be used. Two or more kinds of polyols may be used in combination. The polyester polyol is obtained, for example, by an esterification reaction between a polyol component and an acid component. Specific examples of the polyol component include ethylene glycol, diethylene glycol, 1,3-butanediol, 1,4-butanediol, neopentyl glycol, 3-methyl-1,5-pentanediol, 2-butyl-2-ethyl-1,3-propanediol, 2,4-diethyl-1,5-pentanediol, 1,2-hexanediol, 1,6-hexanediol, 1,8-octanediol, 1,9-nonanediol, 2-methyl-1,8-octanediol, 1,8-decanediol, octadecanediol, glycerin, trimethylolpropane, pentaerythritol, hexanetriol and polypropylene glycol. Specific examples of the acid component include succinic acid, methylsuccinic acid, adipic acid, pimelic acid, azelaic acid, sebacic acid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, 1,4-naphthalenedicarboxylic acid, 4,4'-biphenyldicarboxylic acid, and acid anhydrides thereof. The thickness of the polyurethane-based foamed resin base is preferably 0.05 to 2 mm, and more preferably 0.08 to 1 mm.

[Adhesive layer]

The adhesive layer in the present invention has a first adhesive layer in contact with a base and a second adhesive region in contact with the first adhesive layer and located on the surface side of the adhesive tape, characterized in that the storage elastic modulus G' of the first adhesive layer is higher than the storage elastic modulus G' of the second adhesive region. As a result, the adhesive layer has a structure in which a soft adhesive is laminated on a hard adhesive, and when the adhesive tape is pressure-bonded to the adherend, the soft second adhesive region is crushed and spreads on the first adhesive layer, and the adhesive surface becomes uniform, and excellent waterproofness is exhibited.

When comparing the storage elastic modulus G' of the first adhesive layer and the storage elastic modulus G' of the second adhesive region, it is preferable to compare the storage elastic moduli G' of them at a frequency of 10 Hz and a temperature in the range of 60 to 150°C from the viewpoint of clearly recognizing the difference. The storage elastic modulus G' of the first adhesive layer at a frequency of 10 Hz and a temperature of 60 to 150°C is preferably $0.5 \times 10^5$ to $7 \times 10^5$ Pa, and more preferably $1 \times 10^5$ to $5 \times 10^5$ Pa. The storage elastic modulus G' of the second adhesive region at a frequency of 10 Hz and a temperature of 60 to 150°C is preferably $1 \times 10^4$ to $3 \times 10^5$ Pa, and more preferably $3 \times 10^4$ to $2 \times 10^5$ Pa. Further, the peak temperature of the ratio (tan $\delta$) of the loss elastic modulus G" and the storage elastic modulus G' at a frequency of 10 Hz of the first adhesive layer and the second adhesive region is preferably -40 to 10°C. Specific measurement methods for the storage elastic modulus G' and tan $\delta$ are described in the section of Examples.

The first adhesive layer and the second adhesive region having specific storage elastic moduli G' of the present invention can be obtained, for example, by using different types of curing agents (crosslinking agents) for the same adhesive. Moreover, they can be also obtained by using adhesives having different compositions.

It is preferable that the gel fraction of the first adhesive layer is higher than the gel fraction of the second adhesive region. By this, the second adhesive region is easily crushed at the time of pressure-bonding. The specific method for measuring the gel fraction is described in the section of Examples.

The 25% compression strength according to JIS K-7181 of the second adhesive region is preferably from 0.01 to 1 MPa, and more preferably is 0.05 to 0.5 MPa is. If the 25% compression strength is within the above range, the second adhesive region is easily crushed at the time of pressure-bonding. The specific method for measuring the compression strength is described in the section of Examples.

It is preferable that the rubber hardness according to ASTM2240 of the first adhesive layer is higher than the rubber hardness of the second adhesive region. By this, the second adhesive region is more easily crushed at the time of pressure-bonding. The rubber hardness of the first adhesive layer is preferably 55 to 75, and the rubber hardness of the second adhesive region is preferably 45 to 65.

As the adhesive constituting the adhesive layer, for example, an acrylic adhesive, a rubber-based adhesive and a silicone-based adhesive can be used. These may be used by mixing two or more kinds.

The type of the acrylic adhesive is not particularly limited, and various known acrylic adhesives containing an acrylic copolymer as the main component can be used. As the acrylic copolymer, for example, an acrylic copolymer obtained by copolymerizing a (meth)acrylic acid ester, a carboxyl group-containing monomer, and, if necessary, other monomers, can be used. Specific examples of the (meth)acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, 2-ethylhexyl (meth)acrylate, octyl (meth)acrylate, isooctyl (meth)acrylate, nonyl (meth)acrylate, isononyl (meth)acrylate and lauryl (meth)acrylate. Specific examples of the carboxyl group-containing monomer include (meth)acrylic acid, itaconic acid, crotonic acid, (anhydrous) maleic acid, fumaric acid, 2-carboxy-1-butene, 2-carboxy-1-pentene, 2-carboxy-1-hexene and 2-carboxy-1-heptene. Specific examples of the other monomers include hydroxyl group-containing monomers such as 2-hydroxyethyl (meth)acrylate, 3-hydroxypropyl (meth)acrylate and 4-hydroxybutyl (meth)acrylate; acrylonitrile, styrene, 2-methylolethylacrylamide, vinyl acetate and acryloylmorpholine.

As the acrylic copolymer, particularly, acrylic polymers (A) having a hydroxyl group and a carboxyl group are preferable containing a (meth)acrylic acid alkyl ester (A1) having an alkyl group having 4 to 12 carbon atoms, a carboxyl group-containing monomer (A2), a hydroxyl group-containing monomer (A3) and, if necessary, other monomers, as constituent components.

Specific examples of the (meth)acrylic acid alkyl ester (A1) having an alkyl group having 4 to 12 carbon atoms include n-butyl (meth)acrylate, isobutyl (meth)acrylate, 2-ethylhexyl (meth)acrylate, octyl (meth)acrylate, isooctyl (meth)acrylate, isononyl (meth)acrylate and lauryl (meth)acrylate. The content of the (meth)acrylic acid alkyl ester (A1) is preferably 85% by mass or more, more preferably 87.5% by mass or more, and particularly preferably 90% by mass or more, based on 100% by mass of the constituent components (monomer units) of the acrylic copolymer (A).

Specific examples of the carboxyl group-containing monomer (A2) include (meth)acrylic acid, itaconic acid, crotonic acid, (anhydrous) maleic acid, fumaric acid, 2-carboxy-1-butene, 2-carboxy-1-pentene, 2-carboxy-1-hexene and 2-carboxy-1-heptene. The content of the carboxyl group-containing monomer (A2) is preferably 0.5 to 10% by mass, more preferably 1 to 7% by mass, and particularly preferably 1 to 5% by mass, based on 100% by mass of the constituent components (monomer units) of the acrylic copolymer (A).

Specific examples of the hydroxyl group-containing monomer (A3) include 2-hydroxyethyl (meth)acrylate, 3-hydroxypropyl (meth)acrylate and 4-hydroxybutyl (meth)acrylate. The content of the hydroxyl group-containing monomer (A3) is preferably 0.05 to 10% by mass, more preferably 0.07 to 7% by mass, and particularly preferably 0.1 to 5% by mass, based on 100% by mass of the constituent components (monomer units) of the acrylic copolymer (A).

As the other monomer, vinyl acetate and acryloylmorpholine are preferable. The content of vinyl acetate is preferably 0.1 to 10% by mass, based on 100% by mass of the constituent components (monomer units) of the acrylic copolymer (A). The content of acryloylmorpholine is preferably 0.1 to 10% by mass, based on 100% by mass of the constituent components (monomer units) of the acrylic copolymer (A). Further, as the other monomer, (meth)acrylic acid alkyl esters (A4) having an alkyl group having 1 to 3 carbon atoms such as methyl (meth)acrylate, ethyl (meth)acrylate and propyl (meth)acrylate may also be used.

The acrylic copolymer (A) may contain monomers other than each of the above-exemplified monomers as a constituent component.

In the acrylic adhesive, it is common to use a cross-linking agent having reactivity with the functional group of the acrylic copolymer. As the cross-linking agent, for example, an isocyanate compound, an acid anhydride, an amine compound, an epoxy compound, a metal chelate, an aziridine compound and a melamine compound can be used. The amount of the cross-linking agent to be added is usually 0.01 to 5 parts by mass, and preferably 0.05 to 3 parts by mass with respect to 100 parts by mass of the acrylic copolymer.

To the acrylic adhesive, if necessary, tackifier resins such as rosin-based, terpene-based, petroleum-based, coumarone-indene-based, pure monomer-based, phenol-based and xylene-based tackifier resins; mineral oils such as paraffin-based process oils, polyester-based plasticizers, softening agents containing, for example, vegetable oils, and anti-aging agents such as aromatic secondary amine-based, monophenol-based, bisphenol-based, polyphenol-based, benzimidazole-based and phosphorus acid-based anti-aging agents, may be added. Further, saturated hydrocarbon resins may be blended.

The type of the rubber-based adhesive is not particularly limited, and various known rubber-based adhesives containing a rubber component as the main component can be used. Specific examples of the rubber component include synthetic rubbers such as butyl rubber, polyisobutylene rubber, isoprene rubber, styrene-isobutylene-styrene block copolymer, styrene-isoprene block copolymer, styrene-butadiene rubber, styrene-isoprene-styrene block copolymer, styrene-butadiene-styrene block copolymer, styrene-ethylene-butylene-styrene block copolymer, styrene-ethylene-propylene-styrene block copolymer and styrene-ethylene-propylene block copolymer; and natural rubbers. Two or more kinds of rubber components may be used together. Butyl rubber is generally a rubber containing a copolymer of isobutylene and 1 to 3% by mass of isoprene as the main component.

When a rubber-based adhesive is used for the adhesive layer, the adhesive composition constituting the adhesive layer preferably contains a saturated hydrocarbon resin together with the rubber-based adhesive. The saturated hydrocarbon resin is a hydrocarbon resin having no unsaturated bond, and is a component for improving the adhesiveness of the adhesive layer.

The type of the saturated hydrocarbon resin is not particularly limited, and for example, various alicyclic or aliphatic saturated hydrocarbon resins known as tackifiers can be used. Two or more kinds of saturated hydrocarbon resins may be used in combination. In particular, an alicyclic saturated hydrocarbon resin is preferable, and a hydrocarbon resin whose unsaturated bond is eliminated by hydrogenation treatment is more preferable. A hydrogenated petroleum resin is a commercially available saturated hydrocarbon resin. The hydrogenated petroleum resin is a resin obtained by hydrogenating a petroleum resin (for example, aromatic petroleum resin, aliphatic petroleum resin, copolymerized petroleum resin of alicyclic component and aromatic component). Of these, hydrogenated petroleum resins (alicyclic saturated hydrocarbon resins) obtained by hydrogenating aromatic petroleum resins are preferable. Preferred hydrogenated petroleum resins are available as commercial products (e.g., manufactured by Arakawa Chemical Industries, Ltd., Alcon (registered trademark) P-100). The content of the saturated hydrocarbon resin is preferably 0.01 to 100 parts by mass, and more preferably 0.01 to 80 parts by mass with respect to 100 parts by mass of the adhesive component. The higher the content of the saturated hydrocarbon resin, the better the adhesiveness.

The type of the silicone-based adhesive is not particularly limited, and various known silicone-based adhesives containing a silicone component as the main component can be used. Examples of the silicone component include silicone rubbers and silicone resins containing an organopolysiloxane as the main component. A catalyst such as a platinum catalyst and a cross-linking agent such as a siloxane-based cross-linking agent and a peroxide-based cross-linking agent may be added to such a silicone component to perform cross-linking and polymerization. Further, the saturated hydrocarbon resin described above may also be blended.

Each of the adhesives described above may further contain other components, if necessary. Specific examples thereof include solvents such as toluene; additives such as antioxidants, ultraviolet absorbers, light stabilizers and antistatic agents; fillers or pigments such as carbon black, calcium oxide, magnesium oxide, silica, zinc oxide and titanium oxide.

The adhesive layer can be formed by cross-linking the adhesive. For example, the adhesive can be coated onto the base and subjected to a cross-linking reaction by heating to form an adhesive layer on the base. Alternatively, the adhesive composition may be coated onto a release paper or other film and subjected to a cross-linking reaction by heating to form an adhesive layer, and the adhesive layer may be sticked to one side or both sides of the base. For coating the adhesive composition, for example, a coating device such as a roll coater, a die coater or a lip coater can be used. When heating after coating, the solvent in the adhesive composition can be removed simultaneously with the cross-linking reaction by heating.

The thickness of the adhesive layer is preferably 2 to 100 $\mu$m, and more preferably is 2 to a 50 $\mu$m. The thickness of the first adhesive layer is preferably 2 to 50 $\mu$m, and the thickness of the second adhesive region is preferably 1 to 10 $\mu$m.

[Adhesive tape]

The adhesive tape of the present invention has an adhesive layer on one side or both sides of the base 1. The adhesive layer may be formed only on one side of the base or may be formed on both sides, to give a double-sided adhesive tape.

It is preferable that the adhesive tape of the present invention satisfies protection class IPX-8 (water depth 1.5 M) of the waterproof test according to JIS C 0920, when sticked at a press pressure of 0.2 MPa or more. Details of the waterproof test will be described in the section of Examples.

The adhesive tape of the present invention has a bending moment (bending stiffness) according to JIS P8125 of preferably 10 gf/cm or less, and more preferably 0.01 to 5 gf/cm. The specific method for measuring the bending moment is described in the section of Examples.

The adhesive tape of the present invention has a 10% compression strength according to JIS K-7181 of preferably 20 MPa or less, and more preferably 0.1 to 15 MPa. The specific method for measuring the compression strength is described in the section of Examples.

EXAMPLES

Hereinafter, the present invention will be described in more detail with reference to Examples. However, the present invention is not limited to these examples. In the following description, "parts" means parts by mass.

<Preparation of acrylic adhesives A>

As an acrylic adhesive for use in the first adhesive layer, an acrylic adhesive containing 75 parts of 2-ethylhexyl acrylate, 20 parts of n-butyl acrylate, 3 parts of vinyl acetate, 2 parts of acrylic acid and 0.15 parts of an epoxy-based cross-linking agent (manufactured by Mitsubishi Gas Chemical Company, Inc.), TETRAD (registered trademark) -C) was prepared.

As an acrylic adhesive for use in the second adhesive region, an acrylic adhesive containing 75 parts of 2-ethylhexyl acrylate, 20 parts of n-butyl acrylate, 3 parts of vinyl acetate, 2 parts of acrylic acid and 0.3 parts of an isocyanate-based cross-linking agent (manufactured by Tosoh Corporation, product name L-45E) was prepared.

<Preparation of rubber-based adhesives R>

A kneaded product of 65 parts of natural rubber, 35 parts of SBR, 30 parts of zinc oxide and 10 parts of titanium oxide; 7.5 parts of a reactive phenol resin (manufactured by Showa High Polymer Co., Ltd., product name: CKM-921), 3.0 parts of salicylic acid and 80 parts of a tackifier resin (manufactured by Zeon Corporation, product name: Quinton-U-185) were dissolved in toluene to prepare a rubber-based adhesive, as a rubber-based adhesive for use in the first adhesive layer.

A kneaded product of 100 parts of natural rubber and 10 parts of zinc oxide; 0.5 parts of dipentamethylene thiuram tetrasulfide, 1.7 parts of zinc dibutyldithiocarbamate and 80 parts of a tackifying resin (manufactured by Nippon Zeon Co., Ltd., product name: Quinton-U-185) were dissolved in toluene to prepare a rubber-based adhesive, as a rubber-based adhesive for use in the second adhesive region.

<Preparation of silicone-based adhesives S>

As a silicone-based adhesive for use in the first adhesive layer, a silicone-based adhesive containing 100 parts of an addition-curable silicone adhesive undiluted solution (manufactured by Shin-Etsu Chemical Co., Ltd., product name: KR-3704) with a solid content concentration of 60% by mass, 54 parts of toluene as a diluting solvent and 0.5 parts of a platinum catalyst as a curing catalyst was prepared.

As a silicone- based adhesive for use in the second adhesive region, a silicone-based adhesive containing 100 parts of an addition-curable silicone adhesive undiluted solution (manufactured by Dow Corning Toray Co., Ltd., product name: SD 4587L PSA) with a solid content concentration of 60% by mass, 54 parts of toluene as a dilution solvent and 0.9 parts of a platinum catalyst as a curing catalyst was prepared.

The storage elastic modulus G', tan $\delta$, rubber hardness, gel fraction and 25% compression strength of each of the above adhesives (after hardening and drying) were measured by the following methods. The results are shown in Table 1.

[Storage elastic modulus G' and tan $\delta$]

Using a viscoelastic tester for measurement of dynamic viscoelasticity, an adhesive sample with a thickness of about 2 mm was sandwiched between parallel plates of the measuring part of the tester and the storage elastic modulus G' and the loss elastic modulus G" at a frequency of 10 Hz and a temperature of -40°C to 150°C were measured. The storage elastic modulus G' (x $10^5$ Pa) shown in Table 1 is a value of the storage elastic modulus at a frequency of 10 Hz and 150°C. Furthermore, the tan $\delta$ was determined by the calculation formula: tan $\delta$ (loss coefficient) = G"/G', and the peak temperature was analyzed.

[Rubber hardness]

The rubber hardness of the adhesive sample was measured according to ASTM2240.

[Gel fraction]

An adhesive sample was immersed in toluene at ordinary temperature for one day, and the gel fraction was determined by the following formula.

$$\text{Gel fraction (\%)} = (C/A) \times 100$$

A: Initial mass of adhesive composition
C: Dry mass of adhesive composition after immersion in toluene (drying conditions: 130°C, 2 hours)

[25% compression strength]

Adhesive samples were superposed until the thickness became 12 mm, and the 0 to 50% compression strengths were measured according to JIS K 7181 under conditions of single measurement mode, and a master curve was created and the 25% compression strength was determined, using a compression strength measuring device (manufactured by Shimadzu Corp., device name: AG-20kNX) and measurement (analysis) software (product name: Trapezium X).

<Example 1>

On a releasing-treated PET film, the acrylic adhesive A prepared previously (for first adhesive layer) was coated uniformly, and hardened and dried, to form a first adhesive layer with a thickness of 30 $\mu$m. Next, this first adhesive layer was transferred onto a polyolefin-based foamed resin base (foaming ratio: 1.8 to 2 times).

Separately from this, the acrylic adhesive A prepared previously (for second adhesive region) was coated on a releasing-treated PET film by gravure printing, in a pattern in which round island-shaped adhesive portions a are regularly arranged in a row at a position shifted by half as shown in FIG. 3., and hardened and dried, to form a second adhesive region with a thickness of 3 $\mu$m. The diameter of the round island-shaped adhesive portion a shown in FIG. 3 was 1.0 mm, and the width of the non-adhesive portion b was 0.25 mm. Then, this second adhesive region was transferred onto the first adhesive layer, and cured for 3 days at 40°C, to obtain an adhesive tape.

<Example 2>

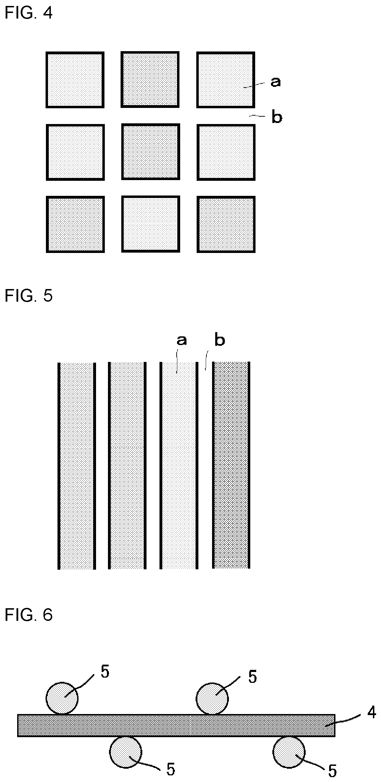

An adhesive tape was produced in the same manner as in Example 1, except that the uneven shape of the surface of the second adhesive region was changed to a pattern in which square island-shaped adhesive portions a are arranged regularly at regular intervals as shown in FIG. 4. The length of one side of the square island-shaped adhesive portion a shown in FIG. 4 was 1.2 mm, and the width of the non-adhesive portion b was 0.33 mm.

<Example 3>

An adhesive tape was produced in the same manner as in Example 1, except that the uneven shape of the surface of the second adhesive region was changed to a pattern in which vertical stripe-shaped adhesive portions a are arranged regularly at regular intervals as shown in FIG 5. The width of the vertical stripe-shaped adhesive portion a of the adhesive layer 2 shown in FIG. 5 was 1.0 mm, and the width of the non-adhesive portion b was 0.25 mm.

<Example 4>

An adhesive tape was produced in the same manner as in Example 1, except that the adhesives forming the first adhesive layer and the second adhesive region were changed to the rubber-based adhesives R prepared previously.

<Example 5>

An adhesive tape was produced in the same manner as in Example 1, except that the adhesives forming the first adhesive layer and the second adhesive region were changed to the silicone-based adhesives S prepared previously.

<Comparative example 1>

An adhesive tape was produced in the same manner as in Example 1, except that the second adhesive region was not made.

<Comparative example 2>

An adhesive tape was produced in the same manner as in Example 1, except that the first adhesive layer was not made and the uneven shape was not formed on the surface of the second adhesive region.

<Comparative example 3>

An adhesive tape was produced in the same manner as in Example 1, except that the second adhesive region was not made and instead, the same pattern as in Example 1 (FIG. 3) was formed by laminating a separator having a convex embossed pattern formed on the surface on the first adhesive layer.

The following tests were performed on the adhesive tapes obtained as described above. The results are shown in Table 1.

[Position adjustment]

The adhesive tape was lightly placed on the adherend, and the ease of shifting when the position was shifted was evaluated according to the following criteria.

"A": It was easy to shift the position of the adhesive tape.
"B": Since the adhesive tape is strongly adhered to the adherend, it was difficult to shift the position.

[Waterproofness]

A double-sided adhesive tape was cut into 45 mm × 50 mm, and one release paper was peeled and sticked to a glass plate with a thickness of 2.0 mm. For this sample, pressurization treatment at 23°C for 5 seconds (0.2 MPa) was performed using an autoclave. Then, this sample was temporarily submerged in water based on JIS IPX7 (waterproof standard), and the waterproofness was evaluated according to the following criteria. Further, a sample was fabricated in the same manner as described above, and submerged in water at a depth of 1.5 M based on JIS IPX8 (waterproof standard), and the waterproofness was evaluated according to the following criteria.

"A": Water did not enter the frame.
"B": Water entered the frame.

[Air removal]

The adhesive tape was lightly placed on the adherend, and the ease of removal when removing air by running one's hand across the part where air exists between the adhesive tape and the adherend was evaluated according to the following criteria.

"A": It was easy to remove air.
"B": It was difficult to remove air because the adhesive layer had no unevenness.

[Bending moment]

An adhesive tape was cut into strips having a width of 38 mm and a length of 50 mm, and this was used as a test piece 4. The test piece 4 was sandwiched between four terminals 5 as shown in FIG. 6. Then, based on JIS P 8125, it was installed on a part that operates during the test of a commercially available Taber stiffness tester (manufactured by Toyo Seiki Seisaku-sho, Ltd.), and a weight of 10 g above and below was attached to the pendulum, and the scale when the bending speed was 3°/sec and the bending angle was 15° was read and used as the measured value. This measured value was substituted into the following formula to calculate the bending moment (M).

$$\text{Bending moment (gf/cm)} = 38.0\ nk/w$$

n:  Scale reading (1 for a 10 g weight)
k:  Moment per scale (gf/cm)
w:  Width of test piece

[10% compression strength]

Adhesive tapes were superposed until the thickness became 12 mm, and the 0 to 50% compression strengths were measured according to JIS K 7181 under conditions of single measurement mode, and a master curve was created and the 10% compression strength was determined, using a compression strength measuring device (manufactured by Shimadzu Corp., device name: AG-20kNX) and measurement (analysis) software (product name: Trapezium X).

Table 1

| | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| Type of adhesive | | A | A | A | R | S | A | A | A |
| Second adhesive region | Pattern | FIG. 3 | FIG. 4 | FIG. 5 | FIG. 3 | FIG. 3 | None | None | Embossed separator |
| | Thickness ($\mu$m) | 3 | 3 | 3 | 3 | 3 | None | 3 | |
| | Storage elastic modulus G' ($\times 10^5$ Pa) | 0.43 | 0.43 | 0.43 | 0.22 | 0.11 | | 0.43 | |
| | Tan$\delta$ peak temperature (°c) | 2 | 2 | 2 | -33 | -1 | | 2 | |
| | Rubber hardness | 60 | 60 | 60 | 50 | 55 | | 60 | |
| | Gel fraction(%) | 77 | 77 | 77 | 40 | 70 | | 77 | |
| | 25% Compression strength(Mpa) | 0.15 | 0.15 | 0.15 | 0.13 | 0.16 | | 0.15 | |

(continued)

| | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| First adhesive layer | Thickness ($\mu$m) | 30 | 30 | 30 | 30 | 30 | 30 | None | 30 |
| | Storage elastic modulus G' ($\times 10^5$ Pa) | 1.2 | 1.2 | 1.2 | 2.5 | 1.6 | 1.2 | | 1.2 |
| | Tan$\delta$ peak temperature (°C) | 4 | 4 | 4 | -13 | 1 | 4 | | 4 |
| | Rubber hardness | 62 | 62 | 62 | 61 | 65 | 62 | | 62 |
| | Gel fraction(%) | 93 | 93 | 93 | 50 | 86 | 93 | | 93 |
| Position adjustment | | A | A | A | A | A | B | B | A |
| Waterproofness | | A | A | A | A | A | A | A | B |
| Air removal | | A | A | A | A | A | B | B | A |
| Bending moment | | 2 | 2 | 2 | 2 | 2 | 2 | 2 | 2 |
| 10% Compression strength (MPa) | | 0.14 | 0.14 | 0.14 | 0.14 | 0.14 | 0.14 | 0.14 | 0.14 |

Industrial applicability

The adhesive tape of the present invention is easy to adjust the position and to remove air at the time of sticking, and is excellent in waterproofness after sticking. Therefore, it is very useful especially in the application of adhering or fixing members constituting portable electronic devices such as smartphones and mobile phones.

Explanation of symbols

1:  Base
2:  First adhesive layer
3:  Second adhesive region
4:  Aadhesive tape (test piece)
5:  Terminal
a:  Adhesive portion
b:  Non-adhesive portion

**Claims**

1. An adhesive tape having an adhesive layer on one side or both sides of a base, wherein
   the adhesive layer when having the adhesive layer on one side of the base, or at least one adhesive layer of two adhesive layers when having the adhesive layer on both sides of the base has a first adhesive layer in contact with the base and a second adhesive region in contact with the first adhesive layer and which is situated on the surface side of the adhesive tape, and
   the storage elastic modulus G' of the first adhesive layer is higher than the storage elastic modulus G' of the second adhesive region.

2. The adhesive tape according to Claim 1, wherein the surface of the adhesive layer on the second adhesive region side has an uneven shape.

3. The adhesive tape according to Claim 1, wherein the gel fraction of the first adhesive layer is higher than the gel fraction of the second adhesive region.

4. The adhesive tape according to Claim 1, wherein the compression strength when compressed by 25% (JIS K 7181) of the second adhesive region is 0.01 to 1 MPa.

5. The adhesive tape according to Claim 1, wherein the peak temperature of the ratio (tan δ) of the loss elastic modulus G" and the storage elastic modulus G' at a frequency of 10 Hz of the first adhesive layer and the second adhesive region is - 40 to 10°C.

6. The adhesive tape according to Claim 1, wherein when sticked at a press pressure of 0.2 MPa or more, the adhesive tape satisfies the protection class IPX-8 (water depth 1.5 M) of the waterproof test (JIS C 0920).

7. The adhesive tape according to Claim 1, wherein the thickness of the adhesive layer is 2 to 100 μm.

8. The adhesive tape according to Claim 1, wherein the bending moment of the adhesive tape is 10 gf/cm or less.

9. The adhesive tape according to Claim 1, wherein the compression strength when compressed by 10% (JIS K 7181) of the adhesive tape is 20 MPa or less.

10. The adhesive tape according to Claim 1, wherein the base is a foamed resin base or a resin film base.

11. The adhesive tape according to Claim 1, wherein the rubber hardness (ASTM 2240) of the first adhesive layer is higher than the rubber hardness (ASTM 2240) of the second adhesive region.

FIG. 1

3
2
1

FIG. 2

3
2
1

FIG. 3

a
b

FIG. 4

FIG. 5

FIG. 6

## INTERNATIONAL SEARCH REPORT

| International application No. |
| --- |
| PCT/JP2018/027850 |

**A. CLASSIFICATION OF SUBJECT MATTER**
Int.Cl. C09J7/38(2018.01)i, C09J7/22(2018.01)i, C09J201/00(2006.01)i

According to International Patent Classification (IPC) or to both national classification and IPC

**B. FIELDS SEARCHED**

Minimum documentation searched (classification system followed by classification symbols)
Int.Cl. C09J7/38, C09J7/22, C09J201/00

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2011-042779 A (NITTO DENKO CORPORATION) 03 March 2011, claims, paragraphs [0001], [0022], [0106]-[0133], tables 1, 2, fig. 1, examples 1-12 & US 2011/0033662 A1, claims, paragraphs [0001], [0021]-[0023], [0141]-[0228], tables 1, 2, fig. 1-3, examples 1-24 & CN 101961939 A & KR 10-2011-0010069 A | 1, 3-11<br>2 |

☒ Further documents are listed in the continuation of Box C.        ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27.09.2018 | Date of mailing of the international search report<br>09.10.2018 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/027850

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2011-042777 A (NITTO DENKO CORPORATION) 03 March 2011, claims, paragraphs [0001], [0015], [0075]-[0095], tables 1-3, fig. 1, 2, examples 1-8 & US 2011/0033699 A1, paragraphs [0001], [0014], [0076]-[0107], tables 1-3, fig. 1, 2, examples 1-8 & CN 101962517 A & KR 10-2011-0010068 A | 1, 3-11<br>2 |
| X<br>A | JP 2011-042776 A (NITTO DENKO CORPORATION) 03 March 2011, claims, paragraphs [0001], [0010], [0066]-[0087], tables 1-3, fig. 1, examples 1-8 & US 2011/0033699 A1, paragraphs [0001], [0014], [0076]-[0107], tables 1-3, fig. 1, 2, examples 1-8 & CN 101962517 A & KR 10-2011-0010068 A | 1, 3-11<br>2 |
| A | JP 2018-039871 A (NITTO DENKO CORPORATION) 15 March 2018, claims, paragraphs [0001], [0005], [0006], [0088], [0101], [0115], table 1, fig. 4, examples 1-4 & WO 2018/043756 A1 | 1-11 |
| A | JP 2017-066210 A (LINTEC CORPORATION) 06 April 2017, claims, tables 1-4, fig. 1, examples 1, 2 (Family: none) | 1-11 |
| A | WO 2017/065275 A1 (NITTO DENKO CORPORATION) 20 April 2017, claims, table 1, fig. 1-9, examples 1-22 & CN 108137998 A | 1-11 |
| A | WO 2017/203883 A1 (NITTO DENKO CORPORATION) 30 November 2017, claims, tables 1, 2, fig. 1-6, examples 1-8 & TW 201809180 A | 1-11 |

Form PCT/ISA/210 (continuation of second sheet) (January 2015)

**EP 3 783 077 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000160117 A
- JP 2006070273 A
- WO 2016143731 A
- WO 2017065275 A
- JP 2018002772 A